# EUROPÄISCHE PATENTSCHRIFT

(11) **EP 2 840 554 B1**
(45) Veröffentlichungstag und Bekanntmachung des Hinweises auf die Patenterteilung: **15.06.2016**
(21) Anmeldenummer: 13181570.6
(22) Anmeldetag: 23.08.2013
(51) Int. Cl.: G07B 15/06

(54) **Verfahren und Funkbake zum Lokalisieren einer Onboard-Unit**
Method and wireless beacon for locating an onboard unit
Procédé et capteur radio pour la localisation d'une unité embarquée

(43) Veröffentlichungstag der Anmeldung: 25.02.2015
(73) Patentinhaber: Kapsch TrafficCom AG, 1120 Wien (AT)
(72) Erfinder: Povolny, Robert, 1190 Wien (AT); Winkler, Josef, 2500 Baden (AT); Frischherz, Martin, 1060 Wien (AT)
(74) Vertreter: Weiser, Andreas

(56) Entgegenhaltungen:
- EP-A2- 2 363 826
- WO-A1-2010/105349
- US-B2- 7 385 525

## Beschreibung

Die vorliegende Erfindung betrifft ein Verfahren zum Lokalisieren einer Onboard-Unit auf einen Bereich um eine Funkbake. Die Erfindung betrifft ferner eine Funkbake für ein solches Verfahren.

In modernen Straßenmautsystemen werden Fahrzeuge mit Onboard-Units (OBUs) ausgestattet, mit deren Hilfe die Fahrzeuge verortet und in der Folge ihre Straßennutzungen ausgewertet bzw. vermautet werden können. Dazu wird eine Vielzahl von Funkbaken über das Straßennetz verteilt, welche jeweils einen begrenzten Funkabdeckungsbereich haben, in dem sie mit den OBUs passierender Fahrzeuge über Funk kommunizieren können, wobei eine erfolgreiche Funkkommunikation die OBU auf den Funkabdeckungsbereich verortet. Die Kommunikation der OBU mit der Funkbake kann dabei auf DSRC (Dedicated Short Range Communication), WAVE (Wireless Access for Vehicular Environment), RFID (Radiofrequency Identification) oder ähnlichen Technologien basieren und die OBUs können dementsprechend von aktivem oder passivem (Transponder-) Typ sein.

Wenn eine Fahrbahn mehrere Fahrspuren aufweist und eine Zuordnung eines passierenden Fahrzeugs zu einer Fahrspur erforderlich ist, wird in der Regel jeder Fahrspur eine eigene Funkbake zugewiesen. Der Funkabdeckungsbereich (die Kommunikationszone) der jeweiligen Funkbake muss dabei durch Anpassung der Sendestärke der Funkbake an die Empfangsempfindlichkeit der OBU (und umgekehrt) bestmöglich auf die Fahrspur begrenzt werden, um das Ansprechen bzw. die Erfassung von Fahrzeug-OBUs auf Nachbarspuren (sog. "cross-talk") zu vermeiden. Dieses Problem ist besonders bei Fahrbahnen mit einzelnen Fahrspuren ("single lanes") von Bedeutung, da ein Ansprechen eines Fahrzeuges auf einer Spur z.B. einer Gegenfahrbahn den Betrieb stören würde, oder bei mehrspurigen Fahrbahnen, bei denen die Fahrspurzuordnung wichtig ist, z.B. bei HOV (high occupancy vehicle) lanes.

Dieses Problem wird noch dadurch verschlimmert, dass durch die fortschreitende technologische Weiterentwicklung der in den OBUs zum Einsatz kommenden Sendeempfang- bzw. Transponderbausteine, seien es nun aktive oder passive, z.B. passive ISO-18000-63 Chips, immer höhere Empfindlichkeiten und Sendestärken auf Seiten der OBUs erreicht werden können. Darüber hinaus wird zunehmend gefordert, dass die beschriebenen Mautsysteme auf mehrere Länder ausweitbar und OBUs verschiedener nationaler Betreiber interoperabel in diesen Systemen einsetzbar sind. Somit kann eine große Typenvielfalt von OBUs mit unterschiedlichsten Empfangsempfindlichkeiten und Sendestärken in einem Straßennetz zum Einsatz kommen, was zu verstärktem cross-talk führt.

Die WO 2010/105349 A1 zeigt ein Kommunikationssystem zwischen einer Antenne und einer OBU. Die OBU sendet eine Nachricht, die deren OBU-Typ angibt, an die Antenne, woraufhin diese die OBU mittels des empfangenen OBU-Typs und einer gemessenen Empfangssignalstärke der Nachricht lokalisieren kann.

Die EP 2 363 826 A2 zeigt das Lokalisieren von RFID-Tags aus denen eine Kennung ausgelesen wird. Das Lokalisieren der RFID-Tags erfolgt durch Auslesen eines der Kennung zugeordneten Parameters.

Die US 7385525 B2 zeigt ein Verfahren zum Lokalisieren eines Fahrzeugs auf einer Fahrspur anhand von Handshäkes zwischen einer Antenne und einer OBU des Fahrzeugs.

Die Erfindung setzt sich zum Ziel, diese Probleme zu lösen und ein Verfahren und eine Funkbake zu schaffen, die ein sicheres Lokalisieren einer OBU auf einen vorgegebenen Bereich, z.B. eine bestimmte Fahrspur einer Fahrbahn, um die Funkbake ermöglichen.

Gemäß einem ersten Aspekt der Erfindung wird das Ziel mit einem Verfahren mit den Merkmalen des Anspruchs 1 erreicht, welches umfasst :
a) Speichern der Kennung der Onboard-Unit und einer zugeordneten Funkeigenschaft ihres Funksendeempfängers in einer Datenbank,
b) Aussenden einer ersten Anfrage mit einer ersten Sendeleistung von der Funkbake,
c) Empfangen, in der Funkbake, einer ersten Antwort, welche die Kennung enthält, von einer Onboard-Unit,
d) Ermitteln der der empfangenen Kennung zugeordneten Funkeigenschaft des Sendeempfängers der Onboard-Unit aus der Datenbank, und
e) Lokalisieren der Onboard-Unit unter Verwendung der ermittelten Funkeigenschaft im vorgegebenen Bereich.

Gemäß der Erfindung werden somit für den Lokalisierungsvorgang individuelle, für jede OBU spezifische Funkeigenschaften berücksichtigt, die in einer Datenbank vorgespeichert werden. Wenn die Kennung keine individuelle OBU - was möglich ist - sondern lediglich deren Typ kennzeichnet, können für einen bestimmten OBU-Typ generalisierte Funkeigenschaften in der Datenbank vorgehalten und für die Lokalisierung verwendet werden. Sollte nun beispielsweise ein neuer Typ von OBU auf den Markt kommen und im Straßenmautsystem verwendet werden, genügt es, in der Datenbank eine entsprechende Typkennung und deren spezifische Funkeigenschaft(en) einzuspeichern. Einer Ausweitung eines Straßensystems auf beliebige Arten von OBUs und deren Funksendeempfänger- bzw. Transponderchips steht somit nichts entgegen, solange sie der Datenbank bekannt sind. Das Verfahren der Erfindung kann dabei sehr einfach auf bestehende Vorrichtungen zur Lokalisierung einer OBU, zum Beispiel im Straßenverkehr, angewendet werden, indem diese mit einer entsprechenden Datenbank verbunden werden und die Funkabdeckungsbereiche der Funkbaken an die jeweils übermittelten OBU-spezifischen Funkeigenschaften angepasst werden.

Indem erfindungsgemäß die erste Antwort eine eindeutige OBU-Kennung enthält und beim Empfangen der ersten Antwort die OBU-Kennung in einer Anwesenheitsliste gespeichert wird, kann ein Fahrzeug eindeutig anhand seiner OBU-Kennung identifiziert und seine Anwesenheit im Funkabdeckungsbereich der Funkbake zumindest temporär gespeichert werden. Mit dieser Information kann die Lokalisierungsgenauigkeit erhöht werden, indem erfindungsgemäß die Schritte b) bis e) nach einem ersten Durchlauf für mindestens einen weiteren Durchlauf wiederholt werden, für jeden eine OBU-Kennung betreffenden Durchlauf der Schritte b) bis e) jeweils ein Lokalisierungsergebnis in der Anwesenheitsliste zu dieser OBU-Kennung gespeichert wird und das Lokalisieren der Onboard-Unit dieser OBU-Kennung verifiziert wird, wenn die Anzahl der zu dieser OBU-Kennung gespeicherten positiven Lokalisierungsergebnisse einen Schwellwert überschreitet. Es ist zu erwähnen, dass diese Anzahl absolut oder relativ definiert sein kann, z.B. auf die Gesamtheit der Lokalisierungsergebnisse einer Onboard-Unit bezogen, und dass der Schwellwert konstant sein oder dynamisch angepasst werden kann.

Gemäß einer ersten bevorzugten Ausführungsform der Erfindung umfasst das Lokalisieren des Schritts e) das Berechnen einer zweiten Sendeleistung in Abhängigkeit der ermittelten Funkeigenschaft und des vorgegebenen Bereichs, das Aussenden einer zweiten Anfrage mit der berechneten zweiten Sendeleistung von der Funkbake und, wenn auf die zweite Anfrage eine zweite Antwort von derselben Onboard-Unit empfangen wird, das Lokalisieren dieser Onboard-Unit als in dem vorgegebenen Bereich befindlich. Bei dieser Ausführungsform wird somit die Sendeleistung der Funkbake jeweils spezifisch an die aktuelle OBU - bzw. deren Typ, wenn die ausgelesene OBU-Kennung deren Typ angibt angepasst. Eine für einen spezifischen OBU-Typ überschießende Sendeleistung, die zu einem unerwünschtem Ansprechen von OBUs auf Nachbarspuren führen könnte, oder eine unzureichende Leistung, die zu einer Fehldetektion führen könnte, wird dadurch vermieden. Da bei dieser Ausführungsform die Stärke der ersten Antwort der Onboard-Unit überdies nicht gemessen werden muss, können allenfalls entstehende Kosten für Messgeräte und Kalibrierungen eingespart werden.

Besonders bevorzugt ist bei der soeben genannten Ausführungsform die betrachtete Funkeigenschaft eine Empfangsempfindlichkeit des Funksendeempfängers der Onboard-Unit. Dies hat den Vorteil, dass die Sendestärke der zweiten Anfrage direkt aus der Empfindlichkeit und einem Radius für den Bereich, in dem die OBU lokalisiert werden soll, berechnet werden kann.

Gemäß einer alternativen zweiten bevorzugten Ausführungsform der Erfindung umfasst das Lokalisieren des Schritts e) das Berechnen eines Schwellwerts für die Empfangssignalstärke in Abhängigkeit der ermittelten Funkeigenschaft, der ersten Sendeleistung und des vorgegebenen Bereichs, das Vergleichen der gemessenen Empfangssignalstärke der ersten Antwort mit dem berechneten Schwellwert und, bei einer Überschreitung des Schwellwerts, das Lokalisieren der Onboard-Unit als in dem vorgegebenen Bereich befindlich. Da hier der Funksendeempfänger der Funkbake nur die Empfangssignalstärke der ersten Antwort messen muss und dadurch die Onboard-Unit lokalisieren kann, ohne eine zweite Anfrage zu senden bzw. ohne eine zweite Antwort der Onboard-Unit zu empfangen, können erste Anfragen schnell hintereinander gesendet werden, ohne dabei den Funkkanal zwischen OBU und Funkbake zu überlasten.

Besonders bevorzugt ist bei der genannten zweiten Ausführungsform die betrachtete Funkeigenschaft ein Maß für das Sendeleistungsvermögen des Funksendeempfängers der Onboard-Unit. Der Abstand der Funkbake zu jener Onboard-Unit, die die Anfrage beantwortet hat, ist so auf Basis der bekannten Sendeleistung der Funkbake besonders einfach zu ermitteln.

Um die Ermittlung der zu der empfangenen Kennung zugeordneten Funkeigenschaft zu erleichtern, ist in einer bevorzugten Variante aller vorgenannten Ausführungsformen die genannte Kennung, wie bereits angedeutet, lediglich eine Typ-Kennung des Funksendeempfängers, d.h. keine für jede individuelle OBU eindeutige Kennung, sondern nur eine den Typ (die Klasse) der OBU kennzeichnende Kennung. Eine direkte Zuordnung von OBU-Typ zu Funkeigenschaft ist so möglich und die Datenbank kann so kompakt wie möglich gehalten werden, da sich der erforderliche Speicherplatz - im Vergleich zu einer möglichen direkten Zuordnung zwischen individuellen OBU-Kennungen und Funkeigenschaften - signifikant verringert.

Um eine Vielzahl von Fahrzeugen lokalisieren zu können, werden bei mehreren auf eine erste Abfrage empfangenen ersten Antworten alle in diesen Antworten enthaltenen OBU-Kennungen in der Anwesenheitsliste gespeichert und für die Schritte d) und e) jede eindeutige in der Anwesenheitsliste gespeicherte OBU-Kennung durchgeführt.

Gemäß einer weiteren bevorzugten Ausführungsform der Erfindung wird bei mehreren Fahrzeugen, wenn die Lokalisierung mittels einer zweiten Anfrage durchgeführt wird, jede der zweiten Anfragen an jeweils eine der in der Anwesenheitsliste gespeicherten OBU-Kennungen adressiert. Dies führt zu einer Zeitersparnis, da alle zweiten Antworten empfangen und erst danach einer OBU-Kennung zugeordnet werden, wenn die Adressierung nicht bereits in der zweiten Anfrage stattfindet.

In einem zweiten Aspekt schafft die Erfindung eine Funkbake zum Lokalisieren einer Onboard-Unit mit den Merkmalen des Anspruchs 9.

Gemäß einer ersten bevorzugten Ausführungsform zeichnet sich die Funkbake dadurch aus,
dass die genannte Funkeigenschaft ein Maß für die Empfangsempfindlichkeit des Funksendeempfängers der Onboard-Unit ist, und
dass der Prozessor dafür ausgebildet ist, beim genannten Lokalisieren
- eine zweite Sendeleistung in Abhängigkeit der ermittelten Funkeigenschaft und des vorgegebenen Bereichs zu berechnen,
- eine zweite Anfrage mit der berechneten zweiten Sendeleistung über den Funksendeempfänger auszusenden, und,
- wenn auf die zweite Anfrage eine zweite Antwort von derselben Onboard-Unit empfangen wird, diese Onboard-Unit als in dem vorgegebenen Bereich befindlich zu lokalisieren.

In einer zweiten bevorzugten Ausführungsform zeichnet sich die Funkbake dadurch aus,
dass die genannte Funkeigenschaft ein Maß für das Sendeleistungsvermögen des Funksendeempfängers der Onboard-Unit ist, und
dass der Prozessor dafür ausgebildet ist, beim genannten Lokalisieren
- einen Schwellwert für die Empfangssignalstärke in Abhängigkeit der ermittelten Funkeigenschaft, der ersten Sendeleistung und des vorgegebenen Bereichs zu berechnen,
- die gemessene Empfangssignalstärke der ersten Antwort mit dem berechneten Schwellwert zu vergleichen, und,
- bei einer Überschreitung des Schwellwerts, die Onboard-Unit als in dem vorgegebenen Bereich befindlich zu lokalisieren.

Bezüglich der Vorteile und weiterer bevorzugter Ausführungsformen der erfindungsgemäßen Funkbake wird auf die vorangegangenen Ausführungen zum Verfahren verwiesen.

Die Erfindung wird nachfolgend anhand von in den beigeschlossenen Zeichnungen dargestellten Ausführungsbeispielen näher erläutert. In den Zeichnungen zeigen:
Fig. 1 eine Fahrbahn mit mehreren Fahrspuren und deren Funkbaken in schematischer Draufsicht;
Fig. 2 eine Onboard-Unit und eine Funkbake gemäß der Erfindung inklusive deren Komponenten in Blockschaltbildform;
die Fig. 3a und 3b zwei verschiedene Ausführungsformen einer Datenbank mit OBU-Kennungen und zugehörigen Funkeigenschaften;
die Fig. 4a und 4b verschiedene Ausführungsformen einer in einer Funkbake geführten Anwesenheitsliste;
die Fig. 5a und 5b jeweils zwei verschiedene Ausführungsformen der Erfindung in Flussdiagrammform; und
die Fig. 6a und 6b Zeitdiagramme von Datenpaketen bzw. Signalen, die im Rahmen der Verfahren der Fig. 5a und 5b auftreten.

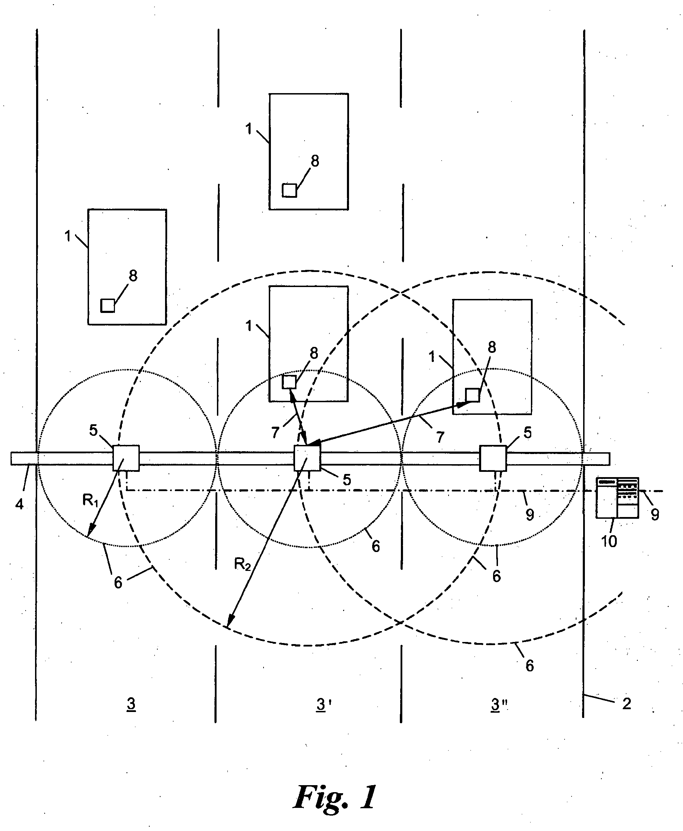

Gemäß Fig. 1 befinden sich mehrere Fahrzeuge 1 auf einer Fahrbahn 2 mit verschiedenen Fahrspuren 3, 3', 3". Eine Gantry 4 überspannt die Fahrbahn 2 und trägt mehrere Funkbaken 5, die jeweils einer Fahrspur 3, 3', 3" zugeordnet sind, um passierende Fahrzeuge auf diese Fahrspur lokalisieren (verorten) zu können. Die Lokalisierung kann beispielsweise für eine fahrtrichtungsabhängige Mauteinhebung, z.B. bei "single-lanes" mit unterschiedlichen Fahrtrichtungen, oder für eine fahrspurabhängige Mauteinhebung, z.B. bei HOV (high occupancy vehicle) lanes, HOT (high occupancy toll) lanes od.dgl., verwendet werden.

Zu diesem Zweck kann jede Funkbake 5 in ihrem Funkabdeckungsbereich 6 Funkkommunikationen 7 mit Onboard-Units (OBUs) 8 durchführen, die jeweils von einem Fahrzeug 1 mitgeführt werden. Der Funkabdeckungsbereich 6 jeder Funkbake 5 ist - z.B. durch Einstellung ihrer Sendeleistung (Sendestärke) und/oder Empfangsempfindlichkeit, wie später noch ausführlicher erörtert - in seiner Größe einstellbar, wie durch die unterschiedlichen Radien R₁ und R₂ gezeigt, um z.B. den Funkabdeckungsbereich 6 genau an jene Fahrspur 3, 3', 3" anzupassen, der die jeweilige Funkbake 5 zugeordnet ist. Im optimal an die Fahrspurweite und OBU angepassten Fall (hier: R₁) zeigt eine erfolgreiche Funkkommunikation 7 zwischen Funkbake 5 und OBU 8 an, dass die OBU 8 sich auf dieser Fahrspur 3, 3', 3" befindet, d.h. die OBU 8 (und damit das Fahrzeug 1) ist bzw. sind lokalisiert. Im Fehlanpassungsfall, wenn die Sendeleistung und/oder Empfangsempfindlichkeit einer Funkbake 5 zu hoch ist, können fälschlich Funkkommunikationen 7 mit OBUs 8 auf Nebenfahrspuren auftreten ("cross-talk"), wie bei der rechten Funkkommunikation 7 gezeigt, die zu einem falschen Lokalisierungsergebnis führen, oder, wenn die Sendeleistung und/oder Empfangsempfindlichkeit der Funkbake 5 zu gering ist, können unter Umständen sogar auf den richtigen, zugeordneten Spuren 3, 3', 3" fahrende OBUs 8 bzw. Fahrzeuge 1 nicht erkannt und lokalisiert werden. Um das zu verhindern, dienen die im Anschluss vorgestellten Maßnahmen und Verfahren.

Die Funkbaken 5, OBUs 8 und Funkkommunikationen 7 zwischen diesen können nach jedem in der Technik bekannten Funkstandard ausgebildet sein, z.B. DSRC (Dedicated Short Range Communication, insbesondere CEN-DSRC), WAVE (Wireless Access for Vehicular Environment), WLAN (Wireless Local Area Network, insbesondere IEEE 802.11p, ITS-G5 und damit kompatible Standards), RFID (Radio-Frequency Identification, insbesondere ISO-18000-63 und damit kompatible Standards), WiFi^{®}, Bluetooth^{®} od.dgl. Die OBUs können dabei sowohl von "aktivem" Typ sein, d.h. mit autarker Energieversorgung, als auch von "passivem" Typ, d.h. in Form von Transponder-Chips, besonders bevorzugt RFID-Chips ("Tags"), welche ihre Energie aus dem Funkfeld einer sie ansprechenden Funkbake 5 (die dann z.B. in Form eines RFID-Readers ausgeführt ist) beziehen.

Jede erfolgreiche Funkkommunikation 7 umfasst in der Regel einen oder mehrere Austausche (Wechsel) von Datenpaketen über die Funkschnittstelle in Form einer Anfrage (Request) und zugehörigen Antwort (Response). Die Funkkommunikationen 7 können dabei - neben der genannten Lokalisierung - verschiedenen anderen (Haupt-) Nutzzwecken dienen, z.B. der Identifikation passierender OBUs 8, der Abrechnung von Maut- bzw. Straßenbenutzungsgebühren, der Versorgung der OBUs 8 bzw. Fahrzeuge 1 mit Informationen usw., wobei diese Funktionen für die hier beschriebene Lokalisierung nicht weiter betrachtet werden. Die Funkbaken 5 können zu all diesen Zwecken über eine Datenverbindung 9 mit einem lokalen Rechner 10 und/oder einer Zentrale (nicht dargestellt) in Verbindung stehen.

Es versteht sich, dass eine beliebige Anzahl von Fahrspuren 3, 3', 3" zum Einsatz kommen kann, dass die Funkbaken 5 nicht direkt über der jeweiligen Fahrspur 2 angeordnet sein müssen und dass die Funkabdeckungsbereiche 6 auch eine andere als die dargestellte Kreisform haben können, z.B. keulenförmig, asymmetrisch od.dgl.

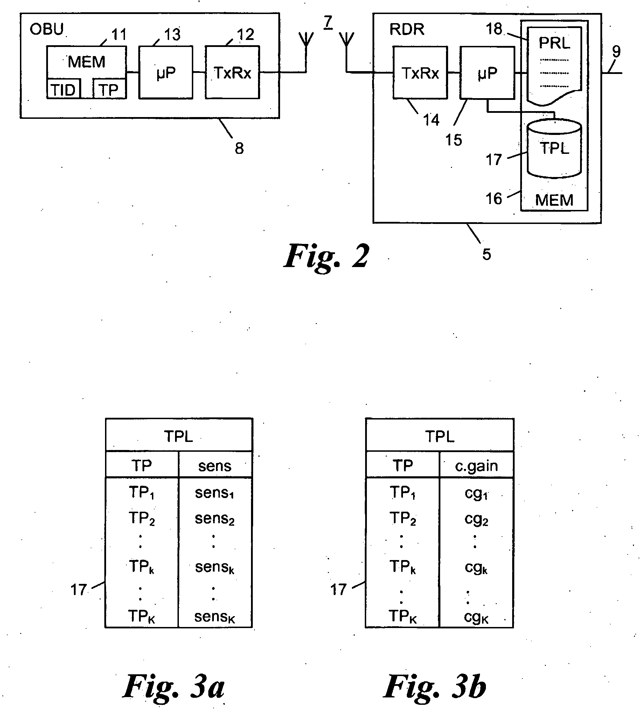

Gemäß Fig. 2 weist jede Onboard-Unit 8 einen Speicher 11 und einen Funksendeempfänger 12 auf, welche über einen Prozessor 13 verbunden sind. Der Speicher 11 beinhaltet zumindest eine eindeutige Kennung TID der OBU 8 ("Tag-ID" bzw. "OBU-Kennung") sowie eine den Typ der OBU 8 oder ihres Funksendeempfängers 12 angebende Kennung TP ("Typ-Kennung"). Die Typ-Kennung TP kann auch ein Teil der OBU-Kennung TID sein, d.h. ein Teilbereich der OBU Kennung TID ihren Typ TP angeben, wie beispielsweise im Standard ISO-18000-63 definiert.

Zur Durchführung der Funkkommunikation 7 mit passierenden OBUs 8 umfasst jede Funkbake 5 zumindest einen Funksendeempfänger 14, der mit dem Funksendeempfänger 12 einer OBU 8 kommunizieren kann, und einen angeschlossenen Prozessor 15. Der Prozessor steht mit einem Speicher 16 in Verbindung, welcher eine Datenbank 17 mit einer Liste TPL von möglichen Typkennungen TP ("Typenliste") von OBUs 8 enthält. Optional kann der Speicher 16 einen Speicherbereich 18 mit einer Liste PRL ("Präsenzliste") der jeweils aktuell im Funkabdeckungsbereich 6 der Funkbake 5 anwesenden OBUs 8 haben, deren Zweck weiter unten erläutert wird. Die Datenbank 17 mit der Typenliste TPL sowie der Bereich 18 mit der Präsenzliste PRL können auch in separaten Speichern angeordnet werden, z.B. über die Datenverbindung 9 im lokalen Rechner 10 und/oder einer entfernten Zentrale (nicht gezeigt).

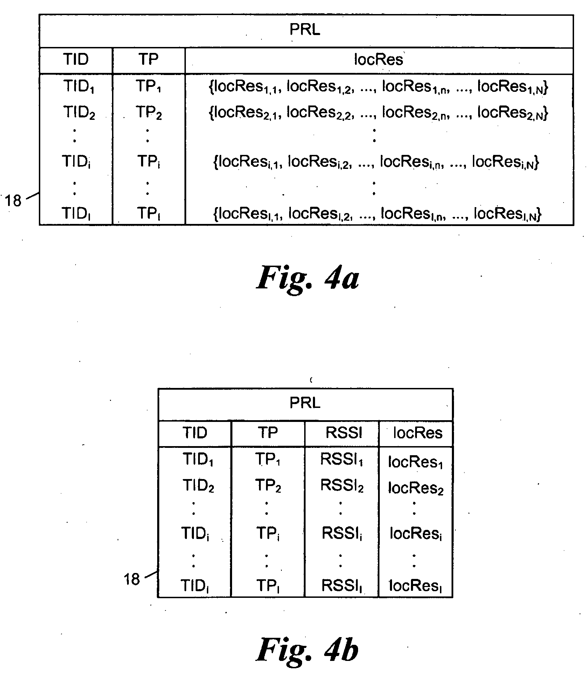

Das von einer Funkbake 5 zum Lokalisieren einer OBU 8 auf eine Fahrspur 3, 3', 3" ausgeführte Verfahren wird nun unter Bezugnahme auf die Fig. 3 bis 6 näher erläutert, wobei die Fig. 3a, 4a, 5a und 6a eine erste Ausführungsform und die Fig. 3b, 4b, 5b und 6b eine zweite Ausführungsform des Verfahrens zeigen, welche auch beliebig kombinierbar sind. Verschiedene OBUs 8, die sich im Funkabdeckungsbereich 6 einer Funkbake 5 befinden können, werden dabei mit dem Index i = 1..I unterschieden, siehe die Präsenzliste PRL der Fig. 4a und 4b, und verschiedene Typen TP von OBUs 8, die im Rahmen des hier betrachteten Systems (Fig. 1) auftreten können, werden im Weiteren mit dem Index k = 1..K unterschieden, siehe die Typenliste TPL der Fig. 3a und 3b.

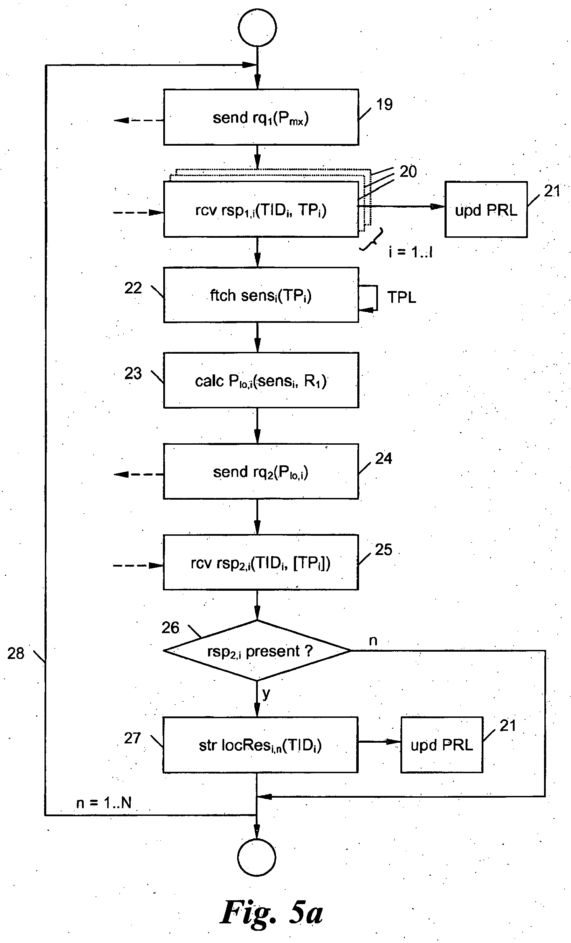

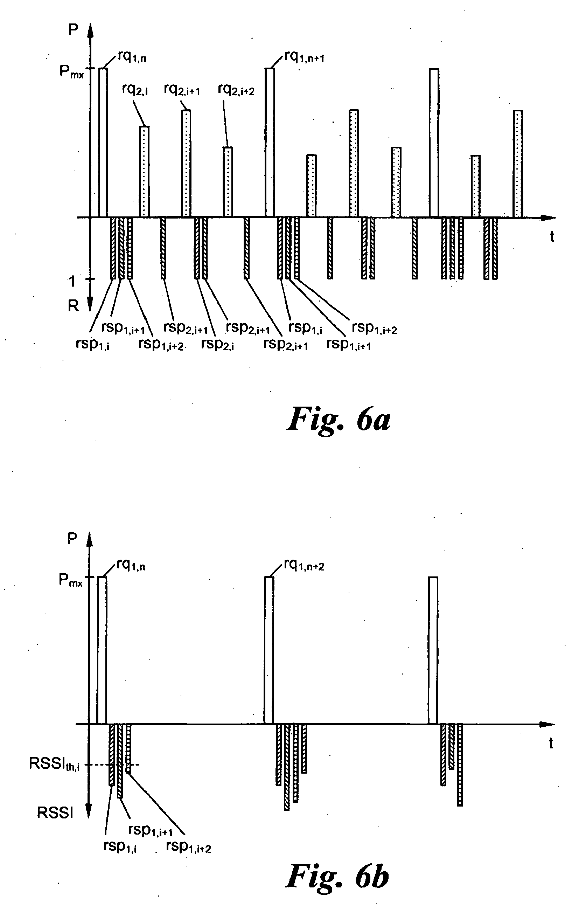

Gemäß den Fig. 5a und 6a sendet die Funkbake 5 in einem ersten Schritt 19 eine erste Anfrage rq₁ mit einer ersten "maximalen" Sendeleistung Pₘₓ aus, die zumindest so groß ist, dass auch solche OBUs 8i, die sich innerhalb des gewünschten Lokalisierungsbereichs 6 am weitesten von der Funkbake 5 entfernt befinden und einen Funksendeempfänger 12i mit der geringsten Empfangsempfindlichkeit sensᵢ aller möglichen Empfangsempfindlichkeiten sensₖ von möglichen OBU-Typen TPₖ haben, d.h. die "am schlechtesten hören", die erste Anfrage rq₁(Pₘₓ) noch empfangen und verarbeiten können. Dadurch kann es sein, dass z.B. auch eine "besonders gut hörende" OBU 8ᵢ₊₁ auf einer Nachbarspur 3 bzw. 3" (wie in Fig. 1 rechts gezeigt) eine solche erste Anfrage rq₁ empfängt und beantwortet, wie im Anschluss erläutert wird.

In einem nächsten Schritt 20 wird nun eine erste Antwort rsp_{1,i} von jeder sich gerade im Funkabdeckungsbereich 6 befindlichen OBU 8ᵢ erhalten. Die Antwort rsp_{1,i} jeder OBU 8ᵢ enthält zumindest die Typ-Kennung TPᵢ der OBU 8ᵢ, bevorzugt auch die OBU-Kennung TIDᵢ der OBU 8ᵢ.

Letztere Ausführungsform des Verfahrens, in welcher auch die OBU-Kennungen TIDᵢ mitempfangen und verarbeitet werden, ist in der Lage, mehrere sich gleichzeitig im Funkabdeckungsbereich 6 der Funkbake 5 befindliche OBUs 8ᵢ zu lokalisieren; in diesem Fall wird in einem Schritt 21 mit jedem Empfang einer ersten Antwort rsp_{1,i} auch die Präsenzliste PRL im Speicher 18 aktualisiert, d.h. die OBU-Kennungen TIDᵢ der anwesenden OBUs 8ᵢ dort eingetragen (Fig. 4a, 4b), um das weitere Lokalisierungsverfahren jeweils für alle vorhandenen OBUs 8ᵢ durchführen zu können, wie später erörtert. Im einfachsten Fall, wenn das Verfahren nur für jeweils eine OBU 8ᵢ im Funkabdeckungsbereich 6 geeignet sein soll und keine weitergehenden Auswertungen erforderlich sind, erübrigt sich der Empfang der OBU-Kennung TIDᵢ und die Führung einer Präsenzliste PRL im Schritt 21 entfällt.

In einem nächsten Schritt 22 wird nun aus der Datenbank 17, genauer aus der Typenliste TPL, zu der (bzw. jeder) gerade empfangenen Typ-Kennung TPᵢ eine zugehörige Funkeigenschaft des Sendeempfängers 12ᵢ der jeweiligen OBU 8ᵢ ermittelt. In dem Verfahrensbeispiel von Fig. 5a ist diese Funkeigenschaft die Empfangsempfindlichkeit sensᵢ des Sendeempfängers 12ᵢ. Dazu wurde in einem früheren (in Fig. 5a nicht gezeigten) Schritt eine entsprechende Typenliste TPL mit möglichen Typ-Kennungen TPₖ von OBUs und deren zugehörigen Empfangsempfindlichkeiten sensₖ in der Datenbank 17 gespeichert (Fig. 3a). Die Empfangsempfindlichkeiten sensₖ können beispielsweise durch ein einmaliges Einmessen einer OBU des jeweiligen Typs TPₖ, wenn diese z.B. auf den Markt kommt oder das erste Mal im System auftritt, bestimmt werden.

Die Empfangsempfindlichkeit sensₖ ist beispielsweise ein Maß, das angibt, mit welcher Leistung ein Signal, wie eine Anfrage rq₁ von der Funkbake 5, in der Onboard-Unit 2 gerade noch empfangen werden muss, um von dieser verarbeitet werden zu können.

In einem Schritt 23 wird nun aus der so ermittelten Empfangsempfindlichkeit sensᵢ einer OBU 8ᵢ eine für diese OBU 8ᵢ individuelle ("zweite") Sendeleistung P_{lo,i} berechnet, welche genau zur Abdeckung des für die Lokalisierung interessierenden Funkabdeckungsbereichs 6 mit der Größe R₁ ausreicht und nicht darüber hinausgeht, d.h. P_{lo,i} = f (sensᵢ, R₁).

Die individuell für die OBU 8ᵢ berechnete zweite Sendeleistung P_{lo,i} wird anschließend für eine erneute ("zweite") Anfrage rq₂ derselben OBU 8ᵢ in einem Schritt 24 verwendet. Wird auf diese zweite Anfrage rq₂(P_{lo,i}) in einem Schritt 2.5 erneut eine ("zweite") Antwort rsp₂,ᵢ von ebendieser OBU 8ᵢ erhalten (Zweig "y" der Verzweigung 26), bedeutet das, dass sich die O-BUi im gewünschten Lokalisierungsbereich befindet, hier z.B. auf der Fahrspur 3'. Dies kann auch in einem (optionalen) Schritt 27 als ein erstes (n = 1) erfolgreiches Lokalisierungsergebnis locRes_{i,n} der OBU 8ᵢ unter deren OBU-Kennung TIDᵢ in der Präsenzliste PRL (Fig. 4a) gespeichert werden. Das Lokalisierungsergebnis locRes_{i,n} kann z.B. als ein binärer Wert, beispielsweise "1" für eine erfolgreiche ("positive") Lokalisierung (Zweig "y" des Vergleichs 26) oder "0" für eine erfolglose ("negative") bzw. "Nicht-Lokalisierung" (Zweig "n" des Vergleichs 26), gespeichert werden.

Wenn das Verfahren für mehrere OBUs 8ᵢ im Funkabdeckungsbereich 6 geeignet ist und die erste Antwort rsp_{1,i} die OBU-Kennung TIDᵢ enthält, kann die zweite Anfragen rq₂(P_{lo,i}) in Schritt 24 an die jeweilige OBU-Kennung TIDᵢ adressiert werden (rq_{2,i}), d.h. es können I zweite Anfrage rq₂ im Schritt 24 ausgesandt werden. Alternativ können die auf eine unspezifische (nicht adressierte) zweite Anfrage rq₂ in Schritt 25 erhaltenen zweiten Antworten rsp_{2,i} mit OBU-Kennungen TIDᵢ gegen die OBU-Kennung TIDᵢ der ersten Antworten rsp_{1,i} geprüft werden, um eine Zuordnung der ersten und zweiten Antworten rsp_{1,i} und rsp_{2,i} für eine OBU 8ᵢ zu erreichen.

Falls gewünscht, können in einer Schleife 28 N Durchläufe des Lokalisierungsverfahrens für eine OBU 8ᵢ wiederholt werden, um mehrere Lokalisierungsergebnisse locRes_{i,n} (n = 1..N) pro OBU 8ᵢ zu erhalten, welche beispielsweise in der Präsenzliste PRL zu der jeweiligen OBU-Kennung TIDᵢ gespeichert werden können. Wenn z.B. das Verhältnis der Anzahl an erfolgreichen Lokalisierungsergebnissen locRes_{i,n} einer OBU 8ᵢ, d.h. der Anzahl der erfolgreichen (positiven) Funkkommunikationen, zu der Anzahl N an durchgeführten Wiederholungen, d.h. gesamten Funkkommunikationen, einen Schwellwert ("Voting-Threshold") überschreitet, kann die Lokalisierung dieser OBU 8ᵢ als verifiziert bzw. validiert betrachtet werden. Die Berechnung dieses Verhältnisses bzw. die Festlegung des Schwellwerts kann dabei auch an die Typ-Kennung TPᵢ angepasst werden, wodurch z.B. qualitativ "schlechteren" OBUs ein anderer Schwellwert zugewiesen werden kann als OBUs "höherer" Qualität. In jedem Fall kann der Schwellwert sowohl absolut, z.B. eine vorgegebene Mindestanzahl an positiven Lokalisierungsergebnissen ("y"), oder relativ sein, z.B. ein vorgegebener Prozentsatz an positiven Lokalisierungsergebnissen ("y") von allen Lokalisierungsergebnissen ("y" und "n").

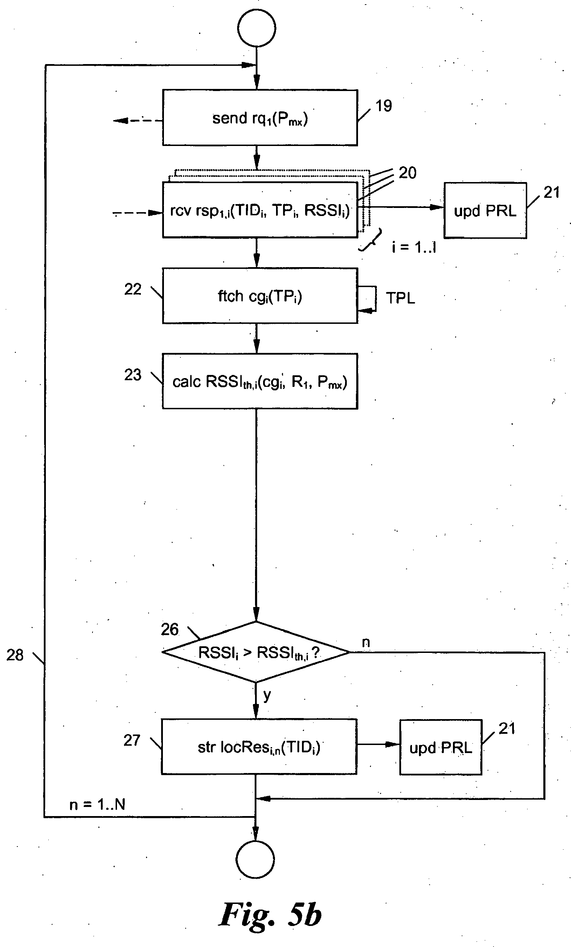

Eine zweite Ausführungsform des erörterten Verfahrens wird nun unter Bezugnahme auf die Fig. 5b und 6b unter Verweis auf die Listenvarianten der Fig. 3b und 4b beschrieben, wobei zur Vereinfachung nur auf die Unterschiede zu der ersten Ausführungsform eingegangen wird. Gemäß Fig. 5b wird beim Empfangen der ersten Antworten rsp_{1,i} im Schritt 20 jeweils auch die Empfangssignalstärke ("received signal strength") RSSIᵢ der jeweiligen Antwort rsp_{1,i} in der Funkbake 5 gemessen. Die Empfangssignalstärke RSSIᵢ kann beispielsweise in der Präsenzliste PRL für die weitere Verarbeitung aufbewahrt werden (Fig. 4b).

Im Schritt 22 wird daraufhin aus der Datenbank 17, genauer der Typenliste TPL, ein Sendeleistungsvermögen cgᵢ ("conversion gain") als Funkeigenschaft der OBU 8ᵢ zu der empfangenen TypKennung TPᵢ ermittelt. Das Sendeleistungsvermögen cgᵢ ist z.B. ein Maß, das angibt, mit welcher absoluten Sendeleistung eine Antwort rsp_{1,i} vom Funksendeempfänger 12ᵢ einer OBU 8ᵢ aktiven Typs ausgesandt wird oder welchen relativen Anteil an (zuvor empfangener) Sendeleistung ein Funksendeempfänger 12ᵢ einer OBU 8ᵢ passiven Typs als Antwort (rsp_{1,i} auf eine eingehende Anfrage rq₁ reflektieren kann. Die Sendeleistungsvermögen cgₖ aller möglichen Typ-Kennungen TPₖ von OBUs 8ₖ können beispielsweise in einem früheren (in Fig. 5b nicht gezeigten) Schritt durch ein einmaliges Einmessen einer OBU des jeweiligen Typs TPₖ, wenn diese z.B. auf den Markt kommt oder das erste Mal im System auftritt, bestimmt und in der Typenliste TPL der Datenbank 17 gespeichert werden.

Aus dem Sendeleistungsvermögen cgᵢ, der Größe R₁ des zu lokalisierenden Bereichs (hier der Größe einer Fahrspur 3, 3', 3") und der Sendeleistung Pₘₓ der ersten Anfrage rq₁ (Pₘₓ) kann nun ein individueller Schwellwert RSSI_{th,i} für die in Schritt 20 gemessene Empfangssignalstärke RSSIᵢ der OBU-Antwort rsp_{1,i} berechnet werden zu RSSI_{th,i} = f(c_{gi}, R₁, Pₘₓ). Liegt die gemessene Empfangsstärke RSSIᵢ der jeweiligen Antwort rsp_{1,i} über dem ermittelten Schwellwert RSSI_{th,i} (Zweig "y" des Vergleichs 26), dann ist die OBU 8ᵢ lokalisiert und das Lökalisierungsergebnis locRes_{i,n} kann nun wieder erstellt und optional gespeichert werden (Schritt 27). Wieder kann optional die Schleife 28 für mehrere Durchläufe N durchlaufen werden, wie zuvor für Fig. 5a beschrieben. Das Lokalisierungsergebnis locRes_{i,n} kann wieder z.B. als ein binärer Wert, beispielsweise "1" für eine erfolgreiche (positive) Lokalisierung (Zweig "y" des Vergleichs 26) oder "0" für eine erfolglose (negative) bzw. Nicht-Lokalisierung (Zweig "n" des Vergleichs 26) gespeichert werden. Es ist aber auch möglich, als Lokalisierungsergebnis locRes_{i,n} ein quantitatives Maß für die Lokalisierung zu speichern, z.B. die gemessene Empfangssignalstärke RSSIᵢ der jeweiligen ersten Antwort rsp_{1,i} der OBU 8ᵢ.

Die Erfindung ist nicht auf die dargestellten Ausführungsformen beschränkt, sondern umfasst alle Varianten, Modifikationen und Kombinationen derselben, die in den Rahmen der angeschlossenen Ansprüche fallen. So können in weiteren Ausführungsformen beispielsweise auch andere als die genannten Funkeigenschaften Empfangsempfindlichkeit sensₖ und Sendeleistungsvermögen cgₖ von OBUs 8ₖ in der Datenbank 17 gespeichert und für die Lokalisierung einer OBU 8ᵢ auf den gewünschten Bereich 6 herangezogen werden.

## Patentansprüche

1. Verfahren zum Lokalisieren einer Onboard-Unit (8), die einen Funksendeempfänger (12) und eine Kennung (TP) hat, auf einen vorgegebenen Bereich (6) um eine Funkbake (5), umfassend:
a) Speichern der Kennung (TP) der Onboard-Unit (8) und einer zugeordneten Funkeigenschaft (sens, cg) ihres Funksendeempfängers (12) in einer Datenbank (17);
b) Aussenden einer ersten Anfrage (rq₁) mit einer ersten Sendeleistung (Pₘₓ) von der Funkbake (5);
c) Empfangen, in der Funkbake (5), einer ersten Antwort (rsp₁), welche die Kennung (TP) und eine eindeutige OBU-Kennung (TID) enthält, von einer Onboard-Unit (8), und Speichern der OBU-Kennung (TID) in einer Anwesenheitsliste (PRL);
d) Ermitteln der der empfangenen Kennung (TP) zugeordneten Funkeigenschaft (sens, cg) des Sendeempfängers (12) der On-board-Unit (8) aus der Datenbank (17); und
e) Lokalisieren der Onboard-Unit (8) unter Verwendung der ermittelten Funkeigenschaft (sens, cg) im vorgegebenen Bereich (6) ;
wobei:
die Schritte b) bis e) nach einem ersten Durchlauf für mindestens einen weiteren Durchlauf wiederholt werden,
für jeden eine OBU-Kennung (TID) betreffenden Durchlauf der Schritte b) bis e) jeweils ein Lokalisierungsergebnis (loc-Res) in der Anwesenheitsliste (PRL) zu dieser OBU-Kennung (TID) gespeichert wird, und
das Lokalisieren der Onboard-Unit (8) dieser OBU-Kennung (TID) verifiziert wird, wenn die Anzahl der zu dieser OBU-Kennung (TID) gespeicherten positiven Lokalisierungsergebnisse (locRes) einen Schwellwert überschreitet.

2. Verfahren nach Anspruch 1, **dadurch gekennzeichnet, dass** das Lokalisieren des Schritts e) umfasst:
Berechnen einer zweiten Sendeleistung (Pₗₒ) in Abhängigkeit der ermittelten Funkeigenschaft (sens) und des vorgegebenen Bereichs (6),
Aussenden einer zweiten Anfrage (rq₂) mit der berechneten zweiten Sendeleistung (Pₗₒ) von der Funkbake (5),
und, wenn auf die zweite Anfrage (rq₂) eine zweite Antwort (rsp₂) von derselben Onboard-Unit (8) empfangen wird, Lokalisieren dieser Onboard-Unit (8) als in dem vorgegebenen Bereich (6) befindlich.

3. Verfahren nach Anspruch 2, **dadurch gekennzeichnet, dass** die genannte Funkeigenschaft eine Empfangsempfindlichkeit (sens) des Funksendeempfängers (12) der Onboard-Unit (8) ist.

4. Verfahren nach Anspruch 1, **dadurch gekennzeichnet, dass** das Lokalisieren des Schritts e) umfasst:
Berechnen eines Schwellwerts (RSSIₜₕ) für die Empfangssignalstärke (RSSI) in Abhängigkeit der ermittelten Funkeigenschaft (cg), der ersten Sendeleistung (Pₘₓ) und des vorgegebenen Bereichs (6),
Vergleichen der gemessenen Empfangssignalstärke (RSSI) der ersten Antwort (rsp₁) mit dem berechneten Schwellwert (RSSIₜₕ),
und, bei einer Überschreitung des Schwellwerts, Lokalisieren der Onboard-Unit (8) als in dem vorgegebenen Bereich (6) befindlich.

5. Verfahren nach Anspruch 4, **dadurch gekennzeichnet, dass** die genannte Funkeigenschaft ein Maß für das Sendeleistungsvermögen (cg) des Funksendeempfängers (12) der Onboard-Unit (8) ist.

6. Verfahren nach einem der Ansprüche 1 bis 5, **dadurch gekennzeichnet, dass** die genannte Kennung (TP) eine Typ-Kennung des Funksendeempfängers (12) ist.

7. Verfahren nach einem der Ansprüche 1 bis 6, **dadurch gekennzeichnet, dass** bei mehreren auf eine erste Abfrage (rq₁) empfangenen ersten Antworten (rsp₁) alle in diesen Antworten enthaltenen OBU-Kennungen (TID) in der Anwesenheitsliste (PRL) gespeichert werden, und
dass die Schritte d) und e) für jede in der Anwesenheitsliste (PRL) gespeicherte OBU-Kennung (TID) durchgeführt werden.

8. Verfahren nach Anspruch 7 in Verbindung mit Anspruch 2 oder 3, **dadurch gekennzeichnet, dass** jede der zweiten Anfragen (rq₂) an jeweils eine der in der Anwesenheitsliste (PRL) gespeicherten OBU-Kennungen (TID) adressiert wird.

9. Funkbake zum Lokalisieren einer Onboard-Unit (8), die einen Funksendeempfänger (12) und eine Kennung (TP) hat, auf einen vorgegebenen Bereich (6) um die Funkbake (5), mit:
einem Speicher (16);
einem Funksendeempfänger (14); und
einem mit dem Speicher (16) und dem Funksendeempfänger (14) in Verbindung, stehenden Prozessor (15);
wobei der Prozessor (15) dafür ausgebildet ist,
a) die Kennung (TP) der Onboard-Unit (8) und eine zugeordnete Funkeigenschaft (sens, cg) deren Funksendeempfängers (12) im Speicher (16) zu speichern,
b) eine erste Anfrage (rq₁) mit einer ersten Sendeleistung (Pₘₓ) über den Funksendeempfänger (14) auszusenden,
c) eine erste Antwort (rsp₁), welche die Kennung (TP) und eine eindeutige OBU-Kennung (TID) enthält, über den Funksendeempfänger (14) von einer Onboard-Unit (8) zu empfangen und die OBU-Kennung (TID) in einer Anwesenheitsliste zu speichern,
d) die der empfangenen Kennung (TP) zugeordnete Funkeigenschaft (sens, cg) des Sendeempfängers (12) der Onboard-Unit (8) aus dem Speicher (16) zu ermitteln, und
e) die Onboard-Unit (8) unter Verwendung der ermittelten Funkeigenschaft (sens, cg) im vorgegebenen Bereich (6) zu lokalisieren, und
wobei der Prozessor weiters dazu ausgebildet ist,
die Schritte b) bis e) nach einem ersten Durchlauf für mindestens einen weiteren Durchlauf zu wiederholen,
für jeden eine OBU-Kennung (TID) betreffenden Durchlauf der Schritte b) bis e) jeweils ein Lokalisierungsergebnis (loc-Res) in der Anwesenheitsliste (PRL) zu dieser OBU-Kennung (TID) zu speichern, und
das Lokalisieren der Onboard-Unit (8) dieser OBU-Kennung (TID) zu verifizieren, wenn die Anzahl der zu dieser OBU-Kennung (TID) gespeicherten positiven Lokalisierungsergebnisse (locRes) einen Schwellwert überschreitet.

10. Funkbake nach Anspruch 9, **dadurch gekennzeichnet,**
**dass** die genannte Funkeigenschaft ein Maß für die Empfangsempfindlichkeit (sens) des Funksendeempfängers (12) der Onboard-Unit (8) ist, und
**dass** der Prozessor (15) dafür ausgebildet ist, beim genannten Lokalisieren
- eine zweite Sendeleistung (Pₗₒ) in Abhängigkeit der ermittelten Funkeigenschaft (sens) und des vorgegebenen Bereichs (6) zu berechnen,
- eine zweite Anfrage (rp₂) mit der berechneten zweiten Sendeleistung (Pₗₒ) über den Funksendeempfänger (14) auszusenden, und,
- wenn auf die zweite Anfrage (rq₂) eine zweite Antwort (rsp₂) von derselben Onboard-Unit (8) empfangen wird, diese On-board-Unit (8) als in dem vorgegebenen Bereich (6) befindlich zu lokalisieren.

11. Funkbake nach Anspruch 9, **dadurch gekennzeichnet,**
**dass** die genannte Funkeigenschaft ein Maß für das Sendeleistungsvermögen (cg) des Funksendeempfängers (12) der Onboard-Unit (8) ist, und
**dass** der Prozessor (15) dafür ausgebildet ist, beim genannten Lokalisieren
- einen Schwellwert (RSSIₜₕ) für die Empfangssignalstärke (RSSI) in Abhängigkeit der ermittelten Funkeigenschaft (cg), der ersten Sendeleistung (Pₘₓ) und des vorgegebenen Bereichs (6) zu berechnen,
- die gemessene Empfangssignalstärke (RSSI) der ersten Antwort (rsp₁) mit dem berechneten Schwellwert (RSSIₜₕ) zu vergleichen, und,
- bei einer Überschreitung des Schwellwerts (RSSIₜₕ), die Onboard-Unit (8) als in dem vorgegebenen Bereich (6) befindlich zu lokalisieren.

12. Funkbake nach einem der Ansprüche 9 bis 11, **dadurch gekennzeichnet, dass** die genannte Kennung (TP) eine Typ-Kennung des Funksendeempfängers (12) ist.

## Claims

1. A method for localising an on-board unit (8), which has a radio transceiver (12) and an identifier (TP), to a predefined area (6) around a radio beacon (5), comprising the following steps:
a) storing the identifier (TP) of the on-board unit (8) and an associated radio property (sens, cg) of the radio transceiver (12) thereof in a database (17);
b) sending a first request (rq₁) with a first transmission power (Pₘₓ) from the radio beacon (5);
c) receiving, in the radio beacon (5), a first response (rsp₁), which contains the identifier (TP) and a unique OBU identifier (TID), from an on-board unit (8), and storing the OBU identifier (TID) in a presence list (PRL);
d) determining, from the database (17), the radio property (sens, cg) of the transceiver (12) of the on-board unit (8) associated with the received identifier (TP); and
e) localising the on-board unit (8) in the predefined area (6) by using the determined radio property (sens, cg); wherein:
the steps b) to e) are repeated for at least one further run-through following a first run-through,
for each run-through of the steps b) to e) concerning an OBU identifier (TID), a localisation result (locRes) is stored in the presence list (PRL) for this OBU identifier (TID), and
the localising of the on-board unit (8) of this OBU identifier (TID) is verified when the number of the positive localisation results (locRes) stored for this OBU identifier (TID) exceeds a threshold value.

2. The method according to Claim 1, **characterised in that** the localising of step e) comprises:
calculating a second transmission power (Pₗₒ) in accordance with the determined radio property (sens) and the predefined area (6),
sending a second request (rq₂) with the calculated second transmission power (Pₗₒ) from the radio beacon (5),
and, when a second response (rsp₂) to the second request (rq₂) is received from the same on-board unit (8), localising this on-board unit (8) as being situated in the predefined area (6).

3. The method according to Claim 2, **characterised in that** said radio property is a transmission sensitivity (sens) of the radio transceiver (12) of the on-board unit (8).

4. The method according to Claim 1, **characterised in that** the localising of step e) comprises:
calculating a threshold value (RSSIₜₕ) for the received signal strength (RSSI) in accordance with the determined radio property (cg), the first transmission power (Pₘₓ) and the predefined area (6),
comparing the measured received signal strength (RSSI) of the first response (rsp₁) with the calculated threshold value (RSSIₜₕ),
and, if the threshold value is exceeded, localising the on-board unit (8) as being situated in the predefined area (6).

5. The method according to Claim 4, **characterised in that** said radio property is a measure for the conversion gain (cg) of the radio transceiver (12) of the on-board unit (8).

6. The method according to one of Claims 1 to 5, **characterised in that** the aforementioned identifier (TP) is a type identifier of the radio transceiver (12).

7. The method according to one of the Claims 1 to 6, **characterised in that**, when multiple first responses (rsp₁) are received to a first request (rq₁), all OBU identifiers (TID) contained in these responses are stored in the presence list (PRL), and
**in that** steps d) and e) are carried out for each OBU identifier (TID) stored in the presence list (PRL).

8. The method according to Claim 7 in conjunction with Claim 2 or 3, **characterised in that** each of the second requests (rq₂) is addressed to one of the OBU identifiers (TID) stored in the presence list (PRL).

9. A radio beacon for localising an on-board unit (8), which has a radio transceiver (12) and an identifier (TP), to a predefined area (6) around the radio beacon (5), comprising:
a memory (16);
a radio transceiver (14); and
a processor (15) connected to the memory (16) and to the radio transceiver (14);
wherein the processor (15) is configured
a) to store the identifier (TP) of the on-board unit (8) and an associated radio property (sens, cg) of the radio transceiver (12) in the memory (16),
b) to send a first request (rq₁) with a first transmission power (Pₘₓ) via the radio transceiver (14),
c) to receive, from an on-board unit (8), a first response (rsp₁), which contains the identifier (TP) and a unique OBU identifier (TID), via the radio transceiver (14), and to store the OBU identifier in the presence list (PRL),
d) to determine, from the memory (16), the radio property (sens, cg) of the transceiver (12) of the on-board unit (8) associated with the received identifier (TP), and
e) to localise the on-board unit (8) in the predefined area (6) by using the determined radio property (sens, cg), and
wherein the processor (15) is further configured to repeat the steps b) to e) for at least one further run-through following a first run-through,
to store a localisation result (locRes) in the presence list (PRL) for this OBU identifier (TID) for each run-through of the steps b) to e) concerning an OBU identifier (TID), and
to verify the localising of the on-board unit (8) of this OBU identifier (TID) when the number of the positive localisation results (locRes) stored for this OBU identifier (TID) exceeds a threshold value.

10. The radio beacon according to Claim 9, **characterised in that**
said radio property is a measure for the transmission sensitivity (sens) of the radio transceiver (12) of the on-board unit (8), and
**in that** the processor (15) is configured, in the case of said localising,
- to calculate a second transmission power (Pₗₒ) in accordance with the determined radio property (sens) and the predefined area (6),
- to send a second request (rp₂) with the calculated second transmission power (Pₗₒ) via the radio transceiver (14), and,
- when a second response (rsp₂) to the second request (rq₂) is received from the same on-board unit (8), to localise this on-board unit (8) as being situated in the predefined area (6).

11. The radio beacon according to Claim 9, **characterised in that**
said radio property is a measure for the conversion gain (cg) of the radio transceiver (12) of the on-board unit (8), and
**in that** the processor (15) is configured, in the case of said localising,
- to calculate a threshold value (RSSIₜₕ) for the received signal strength (RSSI) in accordance with the determined radio property (cg), the first transmission power (Pₘₓ) and the predefined area (6),
- to compare the measured received signal strength (RSSI) of the first response (rsp₁) with the calculated threshold value (RSSIₜₕ), and,
- if the threshold value (RSSIₜₕ) is exceeded, to localise the on-board unit (8) as being situated in the predefined area (6).

12. The radio beacon according to one of Claims 9 to 11, **characterised in that** said identifier (TP) is a type identifier of the radio transceiver (12).

## Revendications

1. Procédé pour localiser une unité embarquée (8), qui a un émetteur-récepteur radio (12) et une identification (TP), sur une zone prédéfinie (6) autour d'une balise radio (5), comprenant :
a) le stockage de l'identification (TP) de l'unité embarquée (8) et d'une caractéristique radio associée (sens, cg) de son émetteur-récepteur radio (12) dans une banque de données (17) ;
b) l'émission d'une première requête (rq₁) avec une première puissance d'émission (Pₘₓ) à partir de la balise radio (5) ;
c) la réception, au niveau de la balise radio (5), d'une première réponse (rsp₁), laquelle contient l'identification (TP) et une identification OBU unique (TID) d'une unité embarquée (8), et le stockage de l'identification OBU (TID) dans une liste de présence (PRL) ;
d) la détermination de la caractéristique radio (sens, cg) de l'émetteur-récepteur (12) de l'unité embarquée (8) associée à l'identification reçue (TP) à partir de la banque de données (17) ; et
e) la localisation de l'unité embarquée (8) en employant la caractéristique radio (sens, cg) déterminée dans la zone prédéfinie (6) ;
dans lequel :
les étapes b) à e) sont répétées pour au moins un autre passage après un premier passage,
pour chaque passage des étapes b) à e) concernant une identification OBU (TID), chaque fois, un résultat de localisation (loc-Res) est mémorisé dans la liste de présence (PRL) par rapport à cette identification OBU (TID), et
la localisation de l'unité embarquée (8) de cette identification OBU (TID) est vérifiée, lorsque le nombre de résultats de localisation (loc-Res) positifs mémorisés pour cette identification OBU (TID) dépasse une valeur de seuil.

2. Procédé selon la revendication 1, **caractérisé en ce que** la localisation de l'étape e) comprend :
le calcul d'une deuxième puissance d'émission (Pₗₒ) en fonction de la caractéristique radio (sens) déterminée et de la zone prédéfinie (6),
l'émission d'une deuxième requête (rq₂) avec la deuxième puissance d'émission (P₁ₒ) calculée par la balise radio (5),
et, lorsqu'une deuxième réponse (rsp₂) de la même unité embarquée (8) est réceptionnée suite à la deuxième requête (rq₂), la localisation de cette unité embarquée (8) comme se situant dans la zone prédéfinie (6).

3. Procédé selon la revendication 2, **caractérisé en ce que** ladite caractéristique radio est une sensibilité de réception (sens) de l'émetteur-récepteur radio (12) de l'unité embarquée (8).

4. Procédé selon la revendication 1, **caractérisé en ce que** la localisation de l'étape e) comprend :
le calcul d'une valeur de seuil (RSSIₜₕ), pour la puissance du signal de réception (RSSI) en fonction de la caractéristique radio (cg) déterminée, de la première puissance d'émission (Pₘₓ) et de la zone prédéfinie (6),
la comparaison de la puissance du signal de réception mesurée (RSSI) de la première réponse (rsp₁) avec la valeur de seuil (RSSIₜₕ) calculée,
et, en cas de dépassement de la valeur de seuil, la localisation de l'unité embarquée (8) comme se situant dans la zone prédéfinie (6).

5. Procédé selon la revendication 4, **caractérisé en ce que** ladite caractéristique radio est une mesure de la capacité de puissance de l'émission (cg) de l'émetteur-récepteur radio (12) de l'unité embarquée (8).

6. Procédé selon l'une des revendications 1 à 5, **caractérisé en ce que** ladite identification (TP) est une identification de type de l'émetteur-récepteur radio (12).

7. Procédé selon l'une des revendications 1 à 6, **caractérisé en ce que**, lors de plusieurs premières réponses (rsp₁) reçues pour une première requête (rq₁), toutes les identifications OBU (TID) contenues dans ces réponses sont mémorisées dans la liste de présence (PRL), et
que les étapes d) et e) sont exécutées pour chacune des identifications OBU (TID) mémorisées dans la liste de présence (PRL).

8. Procédé selon la revendication 7 en liaison avec la revendication 2 ou 3, **caractérisé en ce que** chacune des deuxièmes requêtes (rq₂) est adressée chaque fois à une des identifications OBU (TID) mémorisée dans la liste de présence (PRL).

9. Balise radio pour la localisation d'une unité embarquée (8), qui a un émetteur-récepteur radio (12) et une identification (TP), sur une zone prédéfinie (6) autour de la balise radio (5), avec :
une mémoire (16) ;
un émetteur-récepteur radio (14) ; et
un processeur (15) étant en communication avec la mémoire (16) et l'émetteur-récepteur (14) ;
dans lequel le processeur (15) est conçu pour
a) stocker l'identification (TP) de l'unité embarquée (8) et une caractéristique radio (sens, cg) associée de son émetteur-récepteur radio (12) dans la mémoire (16),
b) émettre une première requête (rq₁) avec une première puissance d'émission (Pₘₓ) par l'émetteur-récepteur radio (14),
c) recevoir une première réponse (rsp₁), laquelle contient l'identification (TP) et une identification OBU (TID) unique, par l'intermédiaire de l'émetteur-récepteur radio (14) provenant d'une unité embarquée (8) et mémoriser l'identification OBU (TID) dans une liste de présence,
d) déterminer la caractéristique radio (sens, cg) de l'émetteur-récepteur (12) de l'unité embarquée (8) associée à l'identification (TP) réceptionnée à partir de la mémoire (16), et
e) localiser l'unité embarquée (8) dans la zone prédéfinie (16) moyennant l'utilisation de la caractéristique radio (sens, cg) déterminée, et
dans lequel le processeur est en outre conçu pour
répéter les étapes b) à e) après un premier passage pour au moins un nouveau passage,
mémoriser, pour chaque passage des étapes b) à e) concernant une identification OBU (TID), chaque fois un résultat de localisation (loc-Res) dans la liste de présence (PRL) par rapport à cette identification OBU (TID), et
vérifier la localisation de l'unité embarquée (8) de cette identification OBU (TID) lorsque le nombre des résultats de localisation (loc-Res) positifs mémorisés pour cette identification OBU (TID) dépasse une valeur de seuil.

10. Balise radio selon la revendication 9, **caractérisé en ce**
**que** ladite caractéristique radio est une mesure pour la sensibilité de réception (sens) de l'émetteur-récepteur radio (12) de l'unité embarquée (8), et
**que** le processeur (15) est conçu pour, dans ladite localisation,
- calculer une deuxième puissance d'émission (P₁ₒ) en fonction de la caractéristique radio (sens) déterminée et de la zone prédéfinie (6),
- émettre une deuxième requête (rq₂) avec la deuxième puissance d'émission (Pₗₒ) calculée par l'intermédiaire de l'émetteur-récepteur radio (14), et
- lorsqu'une deuxième réponse (rsp₂) de la même unité embarquée (8) est réceptionnée suite à la deuxième requête (rq₂), localiser cette unité embarquée (8) comme se situant dans la zone prédéfinie (6).

11. Balise radio selon la revendication 9, **caractérisé en ce**
**que** ladite caractéristique radio est une mesure de la capacité de puissance d'émission (cg) de l'émetteur-récepteur radio (12) de l'unité embarquée (8), et
**que** le processeur (15) est conçu pour, dans ladite localisation,
- calculer une valeur de seuil (RSSIₜₕ) pour la puissance du signal de réception (RSSI) en fonction de la caractéristique radio (cg) déterminée, de la première puissance d'émission (Pₘₓ) et de la zone prédéfinie (6),
- comparer la puissance du signal de réception (RSSI) mesurée de la première réponse (rsp₁) avec la valeur de seuil (RSSIₜₕ) calculée, et
- en cas de dépassement de la valeur de seuil (RSSIₜₕ), localiser l'unité embarquée (8) comme se situant dans la zone prédéfinie (6).

12. Balise radio selon l'une des revendications 9 à 11, **caractérisé en ce que** ladite identification (TP) est une identification de type de l'émetteur-récepteur radio (12).
